# EUROPEAN PATENT APPLICATION

(11) **EP 4 517 508 A1**
(43) Date of publication of application: **05.03.2025**
(21) Application number: 24192091.7
(22) Date of filing: 31.07.2024
(51) Int. Cl.: G06F 3/06

(54) **WORKLOAD AWARENESS FOR CONTROLLERS**

(30) Priority: 29.08.2023 US 202318239311
(71) Applicant: Avago Technologies International Sales Pte. Limited, Singapore 768923 (SG)
(72) Inventor: Jana, Arun Prakash, Irvine, 92618 (US)
(74) Representative: Dilg, Haeusler, Schindelmann Patentanwaltsgesellschaft mbH

(57) **Abstract**

A device (110) in communication with a plurality of memory devices (140) storing a plurality of datasets and a host (105), the device (110) including one or more circuits (115) to receive a plurality of messages pertaining to the plurality of datasets, determine an amount of information corresponding to each dataset of the plurality of datasets, identify actions for each message of the plurality of messages, the actions including at least one of updates to the plurality of datasets or accesses of the plurality of datasets, update a table to reflect receipt of the plurality of messages, and determine a pattern associated with the plurality of messages.

## Description

### BACKGROUND

The present disclosure is related to logical drives. Logical drives and/or components thereof can store data.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a block diagram of a system for monitoring workload, according to some embodiments.
FIG. 2 is a system including a plurality of portions that define a logical drive, according to some embodiments.
FIG. 3 is a block diagram including components of the system illustrated in FIG. 1, according to some embodiments.
FIG. 4 is a table for use in monitoring workload, according to some embodiments.
FIG. 5 is a flow diagram of a process for monitoring workload, according to some embodiments.

### DETAILED DESCRIPTION

Some embodiments are related to systems and methods for accessing workload information pertaining to Input/Output (I/O) messages between hosts and controllers. For example, an I/O message may refer to a message transmitted by a host to a controller. The I/O message may be a read request (e.g., provide access to a given piece of information). During a given interaction (e.g., exchange of I/O messages between the host and the controller) between the host and the controller, a record of the interaction (e.g., information pertaining to the interaction) may not be generated. The controller may not generate the record of the interaction in part because of the configuration and/or arrangement of the controller. For example, the controller may not have access to memory space for use in storing the record of the interaction.

An understanding and/or an awareness of a controller's workload (e.g., a number of I/O messages and/or given I/O message types) may be beneficial as several decision points regarding operation of the controller may be improve responsive to workload awareness. For example, resource distribution (e.g., allocation of memory, computing resources, etc.) may be improved responsive to workload awareness. While I/O message may be executed and/or flow through a given path (e.g., from a host to a controller and then to a memory device), the given path may not provide an opportunity to record executed I/O messages.

Establishing a system and/or a configuration to provide workload awareness may provide several advantages. For example, workload awareness may result in creation of baselines for given controllers for use in detecting when a given controller is performing abnormal operations (e.g., performing actions at an amount that differs from a baseline). As another example, workload awareness may provide intelligent and/or adaptive decision making with respect to workflow allocation. Workload awareness may also provide improvements with respect to Machine Learning (ML). For example, a ML model may be trained, based on training data including workload awareness data, to identify baseline workload expectations for given controllers and when the given controllers are being calibrated and/or configured the ML model may allocate given amounts of memory based on the baseline workload expectations.

Some additional advantageous capabilities that may result from workload awareness include an ability for a controller to adjust a bad block table size for a logical drive and/or a memory device) based on I/O accumulation and I/O rates, an ability for a controller to toggle write coalescing (e.g., allocate and deallocated memory space) based on predicted utilization, resource distribution and/or queue depth, dynamic rate control of I/O background operations (e.g., rebuild, check consistency, etc.), buffer class reassignment for logical drives based on I/O rates, toggle resource based metering based on I/O sizes, and/or calculate a ratio of diverted I/O's to total I/O's for use in making decisions. Logical drives may include at least one of an array of physical disk drives, a redundant array of independent disks (RAID) array. Logical drives may be implemented as one or more portions of a physical memory device. Logical drives may also span and/or be implemented across multiple physical memory devices.

Some technical solutions of the present application provide a system including a device that provides workload awareness by tracking operations and/or interactions with respect to I/O messages. The device may generate a record of the operations and store the record of the operations to create a workload awareness. For example, the device may access a table (e.g., register, a database, etc.) and the device may update given portions of the table responsive to detection of given operations. To continue this example, the device may update a first portion of the table that pertains to read requests. The device may implement several techniques to access workload information. For example, the device may include processing circuits and/or hardware with resources allocated to access workload information by monitoring interactions between the device and the host. Stated otherwise, the device may include hardware that executes given firmware which may cause the hardware to generate a record of the interaction.

As described herein, some of the technical solutions provided by the device include an adjustment of bad block table sizes. Bad block tables may be utilized to process, record, and/or otherwise handle bad blocks. A bad block may refer to and/or include at least one of a bad sector, a portion of the logical drive that no longer provide reliable data storage, and/or an area of the logical drive that has been damaged. Bad blocks may occur as a result of damage caused during a manufacturing process, extended use, various operations, and/or external forces placed on logical drives. The damage caused to the logical drives may cause and/or result in the logical drives developing bad blocks.

The device may be in communication with a host. For example, the device may be in communication with an application that is running on a given operating system and the host (e.g., a component that is hosting and/or implementing the given operating system) may provide one or more requests (e.g., I/O messages) to the device. A host may refer to and/or include switches, routers, and/or other possible packet delivery devices. A host may refer to and/or include a computing system, a computing device, and/or a computer that is running and/or executing an application. In some embodiments, the device and the host may be implemented in a single computing device and/or system. In some embodiments, the device may be implemented and/or housed in a first computing device and the host may be implemented and/or housed in a second computing device.

The communication between the device and the host may be direct (e.g., the device is directly connected to the host) and/or indirect (e.g., communication signals from the host to the device, and vice versa, a transmitted through one or more intervening components and/or networks), in some embodiments. The communication between the host and the device may include the device and the host being electrically coupled with one another. In some embodiments, communication between components may include an exchange of signals. The signals may transmit and/or convey information. For example, the signals may convey electronic data. In some embodiments, the signals may include one or more communication formats. For example, the signals may be transmitted via wired communication. As another example, the signals may be transmitted via wireless communication.

The system may refer to and/or include at least one of Application-Specific Integrated Circuits (ASIC), capacitive load components, display drivers, touch screens, keyboard sensors, mobile devices, computing devices, computers, desktops, laptops, servers, and/or other possible touch controllers. The device may refer to and/or include at least one an integrated circuit, a general purpose processor, a multicore processor, a software programmable device, a programmable logic controller, and/or other possible circuitry and/or hardware, in some embodiments. Similarly, the functionality of the device may be stored, in memory, as software, firmware, and/or as instructions and when the instructions (e.g., the software, firmware, and/or instructions) stored in memory are executed, by a processor, results in the processor performing the functionality of the device (e.g., the processor can monitor interactions to create a workload awareness for the device).

One or more circuits may refer to and/or include memory storing instructions that when executed by one or more processors causes the one or more processors to before operations based on the instructions, in some embodiments. The one or more circuits may refer to an integrated circuit, a general purpose processor, a multicore processor, a software programmable device, a programmable logic controller, and/or other possible circuitry and/or hardware, in some embodiments.

A message may refer to and/or include at least one of an I/O message, a request to perform a write operation, a request to perform a read operation, a request to access information, a request to provide information, a request to view information, a request to record information, a request to replace information, a request to update information, and/or other possible read/write operations, in some embodiments. A dataset may refer to and/or include a collection of information, binary numbers, instructions, variables, values, shared libraries, and/or program code, in some embodiments. An access to a dataset may refer to and/or include providing access to information that is stored in, located in, and/or associated with the dataset, in some embodiments. An update to a dataset may refer to and/or include adjusting, modifying, and/or changing information that is located in and/or stored in the dataset, in some embodiments.

An amount of information may refer to and/or include at least one of a size of a given dataset (e.g., information stored in memory), a number of bits associated with a message, a number of bits associated with corresponding actions (e.g., a number of bits to write given information, a number of bits to read given information, etc.), an amount of space (e.g., memory space, memory resources, etc.) to store information associated with one or more messages, and/or a packet size, in some embodiments. An action may refer to and/or include steps taken and/or executed by circuitry to perform operations associated with a message (e.g., operations executed by a processor to perform a read of information, operations executed by a processor to perform a write of information, etc.). A memory device may refer to and/or include at least one of devices for storing data and/or computer code, storage devices, databases, devices capable of storing instructions and/or information, a logical drive, a physical drive, an array of logical drives, solid state drives, hard-disk drives, hard disk storage, Random Access Memory (RAM), Read Only Memory (ROM), Flash memory, Dynamic Random Access Memory (DRAM) banks, and/or various types of computer storage media, in some embodiments.

A table may refer to and/or include at least one of a map, one or more bits corresponding to various types of information, a data structure including one or more rows storing various types of information, an array including a collection of various types of information, a database storing various types of information, and/or other possible data stores, in some embodiments. A portion of a table may refer to and/or include at least one of a collection of bits, a row located within the table, a column located within the table, and/or various identifiable aspects of a table, in some embodiments. A pattern may refer to and/or include at least one of a total number of I/O messages received, a total number of messages received that pertain to a request type (e.g., a number of read requests, a number of write requests, etc.), a total amount of data received (e.g., a total number of bits, a total number of bytes, etc., that were associated with messages), and/or a total amount of messages having a given amount of information (e.g., a total number of messages that included messages associated with a given number of bits), in some embodiments.

Some embodiments relate to a system. The system can include a plurality of memory devices. The plurality of memory devices can store a plurality of datasets. Each memory device of the plurality of memory devices can comprise a physical medium for storing the plurality of datasets. The system can also include a device. The device can be in communication with the plurality of memory devices and a host. The device can include one or more circuits. The one or more circuits can include a processor and memory. The one or more circuits receive, from the host, a plurality of messages pertaining to the plurality of datasets. The one or more circuits can also determine, using the processor, responsive to receipt of the plurality of messages, an amount of information corresponding to each dataset of the plurality of datasets. The one or more circuits can also identify, using the processor, based on characteristics of the plurality of messages, actions for each message of the plurality of messages, the actions including at least one of updates to the plurality of datasets or accesses of the plurality of datasets. The one or more circuits can also update, using the processor, based on the amount of information and the actions, a table located in the memory to reflect receipt of the plurality of messages, and determine, using the processor, responsive to updating the table, a pattern associated with the plurality of messages. The pattern can indicate at least one of a number of messages pertaining to updates of the plurality of datasets, a number of messages pertaining to accesses of the plurality of datasets, a number of messages corresponding to a given amount of information, or a number of messages included in the plurality of messages.

In some embodiments, the pattern can indicate a first number of messages pertaining to updates of the plurality of datasets and the pattern can indicate a second number of messages pertaining to accesses of the plurality of datasets.

In some embodiment, the one or more circuits can also receive, from the host, a second plurality of messages pertaining to the plurality of datasets. The one or more circuits can also identify, using the processor, based on characteristics of the second plurality of messages, actions for respective messages of the second plurality of messages. The one or more circuits can also detect, using the processor, based on the pattern, a difference between the plurality of messages and the second plurality of messages, and identify, using the processor, responsive to detection of the difference, a second plurality of memory devices to divert at least one message of the second plurality of messages.

In some embodiments, the one or more circuits can also update, using the processor, responsive to a diversion of at least one message of a second plurality of messages, a second table located in the memory to reflect the diversion. The one or more circuits can also determine, using the processor, based on the second table, that a number of diversions exceeds a threshold, and execute, using the processor, responsive to determination that the number of diversions exceeds the threshold, one or more actions to address the number of diversions.

In some embodiments, the one or more circuits can also identify, using the processor, based on the pattern, at least one portion of the plurality of memory devices to allocate for a given action of the actions. The one or more circuits can also monitor, using the processor, responsive to receipt of a second plurality of messages, the pattern based on characteristics of the second plurality of messages. The one or more circuits can also detect, using the processor, a number of instances pertaining to utilization of the at least one portion of the plurality of memory devices, and identify, using the processor, responsive to detection of the number of instances, a change to the pattern.

In some embodiments, the one or more circuits can deallocate, using the processor, responsive to identification of the change to the pattern, the at least one portion of the plurality of memory devices, and process, using the processor, using the at least one portion of the plurality of memory devices, at least one message of the second plurality of messages.

In some embodiments, a first message of the plurality of messages can pertain to a first dataset of the plurality of datasets having a first amount of information. The first message of the plurality of messages can be associated with an update to the first dataset. The one or more circuits can reflect receipt of the first message of the plurality of messages by updating, using the processor, a first number of messages from a first value to a second value, the first number of messages pertaining to updates of the plurality of datasets, and the second value of the first number of messages can account for receipt of the first message, and by updating, using the processor, a second number of messages from a third value to a fourth value, the second number of messages corresponding to the first amount of information, and the fourth value of the second number of messages can account for receipt of the first message.

In some embodiments, the one or more circuits can execute, using the processor, one or more actions to process the plurality of messages. The one or more circuits can also detect, using the processor, responsive to execution of the one or more actions, at least one message of the plurality of messages associated with a memory device of the plurality of memory devices that includes a bad block, and update, using the processor, responsive to detection of the at least one message, a second table located in the memory corresponding to memory devices of the plurality of memory devices with bad blocks from a first size to a second size to account for the memory device including the bad block.

In the embodiments, the table can include a plurality of portions and the one or more circuits can update, using the processor, based on the amount of information and the actions, the table located in the memory to reflect receipt of the plurality of messages by updating, using the processor, responsive to detection of a first message of the plurality of messages indicating a first update to a first dataset of the plurality of datasets, a first portion of the plurality portions to include an indication of receipt of the first message, by updating, using the processor, responsive to detection of a second message of the plurality of messages indicating a first access of a second dataset of the plurality of datasets, a second portion of the plurality of portions to include an indication of receipt of the second message, by updating, using the processor, based on an amount of information associated with at least one of the first message or the second message, a third portion of the plurality of portions to reflect an indication of at least one of the first message or the second message corresponding to the amount of information, and by updating, using the processor, a fourth portion of the plurality of portions to indicate an indication of the first message and an indication of the second message.

Some embodiments relate to a device. The device can be in communication with a plurality of memory devices storing a plurality of datasets and a host. Each memory device of the plurality of memory devices can include a physical medium for storing the plurality of datasets. The device can include one or more circuits. The one or more circuits can include a processor and memory. The one or more circuits can receive, from the host, a plurality of messages pertaining to the plurality of datasets. The one or more circuits can also determine, using the processor, responsive to receipt of the plurality of messages, an amount of information corresponding to each dataset of the plurality of datasets. The one or more circuits can also identify, using the processor, based on characteristics of the plurality of messages, actions for each message of the plurality of messages, the actions including at least one of updates to the plurality of datasets or accesses of the plurality of datasets. The one or more circuits can also update, using the processor, based on the amount of information and the actions, a table located in the memory to reflect receipt of the plurality of messages, and determine, using the processor, responsive to updating the table, a pattern associated with the plurality of messages. The pattern can indicate at least one of a number of messages pertaining to updates of the plurality of datasets, a number of messages pertaining to accesses of the plurality of datasets, a number of messages corresponding to a given amount of information, or a number of messages included in the plurality of messages.

In some embodiments, the pattern can indicate a first number of messages pertaining to updates of the plurality of datasets and the pattern can indicate a second number of messages pertaining to accesses of the plurality of datasets.

In some embodiment, the one or more circuits can also receive, from the host, a second plurality of messages pertaining to the plurality of datasets. The one or more circuits can also identify, using the processor, based on characteristics of the second plurality of messages, actions for respective messages of the second plurality of messages. The one or more circuits can also detect, using the processor, based on the pattern, a difference between the plurality of messages and the second plurality of messages, and identify, using the processor, responsive to detection of the difference, a second plurality of memory devices to divert at least one message of the second plurality of messages.

In some embodiments, the one or more circuits can also update, using the processor, responsive to a diversion of at least one message of a second plurality of messages, a second table located in the memory to reflect the diversion. The one or more circuits can also determine, using the processor, based on the second table, that a number of diversions exceeds a threshold, and execute, using the processor, responsive to determination that the number of diversions exceeds the threshold, one or more actions to address the number of diversions.

In some embodiments, the one or more circuits can also identify, using the processor, based on the pattern, at least one portion of the plurality of memory devices to allocate for a given action of the actions. The one or more circuits can also monitor, using the processor, responsive to receipt of a second plurality of messages, the pattern based on characteristics of the second plurality of messages. The one or more circuits can also detect, using the processor, a number of instances pertaining to utilization of the at least one portion of the plurality of memory devices, and identify, using the processor, responsive to detection of the number of instances, a change to the pattern.

In some embodiments, the one or more circuits can also deallocate, using the processor, responsive to identification of the change to the pattern, the at least one portion of the plurality of memory devices, and process, using the processor, using the at least one portion of the plurality of memory devices, at least one message of the second plurality of messages.

In some embodiments, a first message of the plurality of messages can pertain to a first dataset of the plurality of datasets having a first amount of information. The first message of the plurality of messages can be associated with an update to the first dataset. The one or more circuits can reflect receipt of the first message of the plurality of messages by updating, using the processor, a first number of messages from a first value to a second value, the first number of messages pertaining to updates of the plurality of datasets, and the second value of the first number of messages can account for receipt of the first message, and by updating, using the processor, a second number of messages from a third value to a fourth value, the second number of messages corresponding to the first amount of information, and the fourth value of the second number of messages can account for receipt of the first message.

In some embodiments, the one or more circuits can execute, using the processor, one or more actions to process the plurality of messages. The one or more circuits can also detect, using the processor, responsive to execution of the one or more actions, at least one message of the plurality of messages associated with a memory device of the plurality of memory devices that includes a bad block, and update, using the processor, responsive to detection of the at least one message, a second table located in the memory corresponding to memory devices of the plurality of memory devices with bad blocks from a first size to a second size to account for the memory device including the bad block.

Some embodiments relate to a method. The method can include receiving, by one or more circuits comprising a processor and memory, from a host, a plurality of messages pertaining to a plurality of datasets stored by a plurality of memory devices. Each memory device of the plurality of memory devices can include a physical medium for storing the plurality of datasets. The method can also include determining, by the one or more circuits using the processor, responsive to receipt of the plurality of messages, an amount of information corresponding to each dataset of the plurality of datasets. The method can also include identifying, by the one or more circuits using the processor, based on characteristics of the plurality of messages, actions for each message of the plurality of messages, the actions including at least one of updates to the plurality of datasets or accesses of the plurality of datasets. The method can also include updating, by the one or more circuits using the processor, based on the amount of information and the actions, a table located in the memory to reflect receipt of the plurality of messages, and determining, by the one or more circuits using the processor, responsive to updating the table, a pattern associated with the plurality of messages. The pattern can indicate at least one of a number of messages pertaining to updates of the plurality of datasets, a number of messages pertaining to accesses of the plurality of datasets, a number of messages corresponding to a given amount of information, or a number of messages included in the plurality of messages.

In some embodiments, the method can also include identifying, by the one or more circuits using the processor, based on the pattern, at least one portion of the plurality of memory devices to allocate for a given action of the actions. The method can also include monitoring, by the one or more circuits using the processor, responsive to receipt of a second plurality of messages, the pattern based on characteristics of the second plurality of messages. The method can also include detecting, by the one or more circuits using the processor, a number of instances pertaining to utilization of the at least one portion of the plurality of memory devices, and identifying, by the one or more circuits using the processor, responsive to detection of the number of instances, a change to the pattern.

In some embodiments, the method can also include deallocating, by the one or more circuits using the processor, responsive to identification of the change to the pattern, the at least one portion of the plurality of memory devices, and processing, by the one or more circuits using the processor, using the at least one portion of the plurality of memory devices, at least one message of the second plurality of messages.

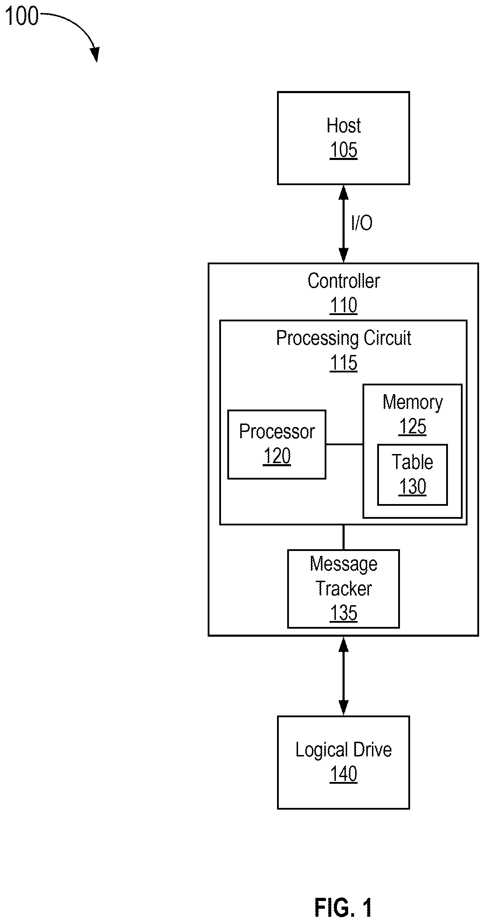

FIG. 1 depicts a block diagram of a system 100, according to some embodiments. The system 100 may include host 105, controller 110, and logical drive 140. In some embodiments, the controller 110 may include and/or be implemented as the device described herein. In some embodiments, the controller 110 may perform operations similar to that of the device described herein. In some embodiments, the host 105 may include the host described herein. In some embodiments, the logical drive 140 may include and/or be implemented as the logical drive described herein.

The controller 110 may be in communication with the host 105. For example, the controller 110 and the host 105 may exchange messages and/or otherwise communicate with one another. For example, the host 105 may provide, to the controller 110, one or more Input/Output (I/O) messages. The I/O messages are illustrated as I/O in FIG. 1. The controller 110 may be in communication with the logical drive 140. For example, the controller 110 may be able to access information stored by the logical drive 140. To continue this example, the controller 110 may interface with the logical drive 140 and while interfacing with the logical drive 140, the controller 110 may access information.

The I/O messages may include and/or refer to the requests described herein. For example, the I/O messages may include one or more write operation requests. The controller 110 may be in communication with the logical drive 140. For example, the controller 110 may access and/or provide information to the logical drive 140 by performing and/or otherwise executing one or more operations. As another example, the controller 110 may perform given actions based on and/or responsive to receiving one or more I/O messages. To continue this example, the controller 110 may perform a first given operation based on a first I/O message pertaining to a write request and the controller 110 may perform a second given operation based on a second I/O message pertaining to a read request.

The controller 110 includes processing circuit 115 and message tracker 135. The processing circuit 115 may refer to and/or include at least one of the circuits and/or processing circuits described herein. The processing circuit 115 includes at least one processor 120 and memory 125. Memory 125 may be one or more devices (e.g., RAM, ROM, Flash memory, hard disk storage) for storing data and/or computer code for completing and/or facilitating the various processes described herein. Memory 125 may be or include non-transient volatile memory, nonvolatile memory, and non-transitory computer storage media. Memory 125 may include database components, object code components, script components, or any other type of information structure for supporting the various activities and information structures described herein. Memory 125 may be communicably coupled to the processors 120 and include computer code or instructions (e.g., firmware or software) for executing one or more processes described herein. The processors 120 may be implemented as one or more application specific integrated circuits (ASICs), field programmable gate arrays (FPGAs), a group of processing components, or other suitable electronic processing components. Memory 125 may store one or more instructions that, when executed by the processors 120, cause the processors 120 to perform one or more of the various operations described herein. Memory 125 may store a table 130. The table 130 may refer to and/or include the various tables and/or data structures described herein. In some embodiments, the table 130 may be located in the memory 125. For example, the memory 125 may keep, store, and/or maintain the table 130. In some embodiments, the processing circuit 115 may update the table 130.

The message tracker 135 may interface with and/or otherwise communicate with the processing circuit 115. For example, the message tracker 135 may be communicable coupled with the processing circuit 115. In some embodiments, the processing circuit 115 may include the message tracker 135. In some embodiments, the processing circuit 115 may perform similar functionality to that of the message tracker 135. For example, memory 125 may store firmware that, when executed by the processors 120, causes the processors 120 to perform operations similar to that of the message tracker 135.

The message tracker 135 may monitor interactions between the host 105 and the controller 110. For example, the message tracker 135 may detect and/or identify receipt of I/O messages and the message tracker 135 may update the table 130 to reflect receipt of the I/O messages. In some embodiments, the message tracker 135 may analyze, examine, review, and/or otherwise inspect the I/O messages and/or information pertaining to the I/O messages (e.g., metadata). For example, the message tracker 135 may inspect a first I/O message and determine that the first I/O message pertains to a read request. To continue this example, the message tracker 135 may update a portion of the table 130 that pertains to read requests to include an indication of the first I/O message. In some embodiments, updating one or more portions of the table 130 to include indications of I/O messages may refer to and/or include incrementing a counter (e.g., increase a count), update a collection of bits, increases a count in a register, and/or other possibilities.

The logical drive 140 may include one or more logical drives 140. For example, the logical drive 140 may include a plurality of logical drives. The logical drives 140 may include a plurality of portions. The plurality of portions may include the portions described herein. The plurality of portions may refer to one or more portions of a given logical drive 140 and/or the plurality of portions may refer to a collection of portions for one or more logical drives 140. The plurality of portions may include a plurality of segments. For example, a first portion may include one or more segments. In some embodiments, the plurality of segments may be located in a plurality of rows of the logical drives. For example, the segments may refer to and/or include one or more strips and the strips may be located in one or more rows of the logical drives 140. The logical drives 140 may store and/or maintain information in one or more segments. For example, a first piece of information may be located in a first segment and a second piece of information may be located in a second segment. In some embodiments, the logical drives 140 may include and/or be implemented as physical medium. For example, the logical drives 140 may be implemented across physical disk drives and the physical disk drives (e.g., a physical medium) may store information. In some embodiments, the physical medium including and/or implementing the logical drives 140 may store one or more datasets. For example, the physical medium may store at least one of the datasets described herein. In some embodiments, the physical medium may refer to and/or include a RAID array. In some embodiments, the physical medium may include at least one of the storage devices described herein. For example, the physical medium may include solid state drives.

The processing circuit 115 may receive one or more messages. For example, the processing circuit 115 may receive a first message and a second message. In some embodiments, the messages received by the processing circuit 115 may refer to and/or include the I/O messages. For example, the processing circuit 115 may receive a first I/O message and a second I/O messages. In some embodiments, the I/O messages may pertain to a plurality of datasets. For example, a first message may pertain to a first dataset located in a given segment and/or a given portion of the logical drive 140. The processing circuit 115 may receive the messages from the host 105. For example, the host 105 may communicate a first message to the processing circuit 115 and the processing circuit 115 may receive the first message.

The message tracker 135 may determine an amount of information corresponding to one or more datasets. For example, the message tracker 135 may determine that a first dataset includes and/or pertains to a given number of bits and/or bytes. To continue this example, the first dataset may be located within the logical drive 140. In some embodiments, the message tracker 135 may determine one or more amounts of information. For example, the message tracker 135 may determine a first amount of information pertaining to a first dataset and the message tracker 135 may determine a second amount of information pertaining to a second dataset. In some embodiments, the amounts of information may be different. For example, a first dataset may be larger (e.g., includes more information) than a second dataset.

In some embodiments, the message tracker 135 may determine, responsive to receipt of the I/O messages, an amount of information. For example, the message tracker 135 may identify one or more datasets, based on the I/O messages, and the message tracker 135 may determine an amount of information for the one or more datasets. In some embodiments, the message tracker 135 may determine the amount of information for the one or more datasets based on a size of the datasets (e.g., number of bits).

As a non-limiting example, the processing circuit 115 may receive a first message and the first message may pertain to a read request (e.g., access a given piece of information). In this non-limiting example, the message tracker 135 may detect that the processing circuit 115 received the first message. To continue this non-limiting example, the message tracker 135 may determine an amount of information associated with the first message (e.g., the read request). In this non-limiting example, the message tracker 135 may determine the amount of information by detecting that the first message is a read request and by detecting an amount of information that is associated with the read request (e.g., determine a size of a dataset for which the read request is trying to access).

The message tracker 135 may identify actions for one or more messages. For example, the message tracker 135 may identify a first action for a first message and the message tracker 135 may identify a second action for a second message. In some embodiments, the actions for the one or more messages may include operations, steps, and/or activities that may be performed to execute and/or implement the messages. For example, a first message may be a read request and the actions for the read request may include the processing circuit 115 accessing information that is located in the logical drive 140. To continue this example, the first message may pertain to a given piece of information and the action may include the processing circuit 115 accessing the given piece of information. As another example, a second message may be a write request and the actions for the write request may include the processing circuit 115 updating information that is located in the logical drive 140. To continue this example, the second message may include and/or otherwise identify a given piece of information and the processing circuit 115 can provide the given piece of information to the logical drive 140. In some embodiments, the message tracker 135 may identify the actions based on characteristics of the messages. For example, a first message may be a read request and read requests may include a first information type (e.g., characteristics), and a second message may be a write request and write requests may include a second information type (e.g., characteristics). To continue this example, the message tracker 135 may determine that the first message is a read request responsive to detecting that the first message includes the first information type and the message tracker 135 may determine that the second message is a write request responsive to detecting that the second messages includes the second information type.

The message tracker 135 may update a table to reflect receipt of one or more messages. For example, the message tracker 135 may update the table 130. In some embodiments, the message tracker 135 may update the table 130 to reflect receipt of the one or more messages by updating given portions of the table 130 that pertain to given messages. For example, a first portion of the table 130 may pertain to read requests and the message tracker 135 may update (e.g., increment, adjust, and/or otherwise change) the first portion to reflect receipt of a read request. To continue this example, the first portion may include a collection of bits and the message tracker 135 may update the table 130 to reflect receipt of the read request by adjusting the bits to adjust a number (as indicated by the collection of bits) from a first value to a second value.

In some embodiments, the message tracker 135 may update, based on the amount of information and the actions, a table to reflect receipt of one or more messages. For example, the processing circuit 115 may receive a first read request (e.g., a first message) and the read request may be associated with a dataset that includes a given number of bits (e.g., an amount of information). In this example, the message tracker 135 may update a first portion of the table 130 to reflect receipt of a read request (e.g., the first portion pertains to read requests) and the message tracker 135 may update a second portion of the table 130 to reflect the amount of information (e.g., the second portion of the tables pertains to messages having a given amount of information).

The message tracker 135 may determine a pattern associated with one or more messages. For example, the message tracker 135 may determine that the controller 110 receives twice as many read requests in relation write requests. In some embodiments, the pattern may refer to and/or include at least one of a workload, workload awareness, and/or operation records. The message tracker 135 may determine the pattern by at least one of analyzing, reviewing, examining, and/or inspecting the table 130. For example, the message tracker 135 may update a first portion of the table 130 responsive to subsequent read requests received by the processing circuit 115 and the message tracker 135 may update a second portion of the table 130 responsive to subsequent write requests received by the processing circuit 115. To continue this example, the message tracker 135 may determine the pattern by comparing the first portion to the second portion (e.g., which portion includes a larger number). As another example, the message tracker 135 may determine the pattern by consolidating, combining, and/or otherwise merging information included in the portions of the table 130. For example, the message tracker 135 may determine a number of read requests received by the processing circuit 115 and the message tracker 135 may determine a number of write requests by the processing circuit 115. To continue this example, the message tracker 135 may combine the number of read requests and the number of write of requests.

In some embodiments, the message tracker 135 may update the table 130 for a given amount of time (e.g., 1 day, 1 month, 1 year, etc.) and during the given amount of time the message tracker 135 may continue to update the table 130 responsive to the processing circuit 115 receiving messages. For example, the message tracker 135 may update the table for 1 month and upon completion of updating the table for 1 month, the message tracker 135 may determine the pattern.

In some embodiments, the pattern indicates a number and/or an amount of messages. For example, the pattern may indicate a number of messages (of the messages received by the processing circuit 115) that pertain to a given action. In some embodiments, the pattern may indicate at least one of a number of messages pertaining to updates, a number of messages pertaining to accesses, a number of messages corresponding to a given amount of information, and/or a number of messages included in the messages received by the processing circuit 115. In some embodiments, the pattern may indicate a first number of messages pertaining to updates of datasets and the pattern may indicate a second number of messages pertaining to accesses of the datasets.

In some embodiments, the processing circuit 115 may receive the messages continuously and/or semi continuously. For example, the processing circuit 115 may receive a first message, followed by a second message, and then followed by a third message. In some embodiments, the processing circuit 115 may receive the first message and the processing circuit 115 may then receive, after a given amount of time, the second message. In some embodiments, the message tracker 135 examines messages responsive to receipt of the message. In some embodiments, the message tracker 135 may examine a plurality of messages. For example, the message tracker 135 may examine a first message and a second message.

In some embodiments, the datasets described herein may be located and/or associated with one or more rows of memory. For example, a first segment of a first portion of the logical drive 140 and a first segment of a second portion of the logical drive 140 may both be associated with a first row of memory. As another example, a given segment of a first portion may be associated with a first row of memory and a given segment of a second portion may be associated with a second row of memory. A presence of a bad block in a given row of memory may cause each segment of the given row of memory to be diverted even when one or more portions, having a segment in the given row, do not contain a bad block. For example, the first row of memory, described above, may have a bad block and as a result, a request (e.g., an I/O message) associated with the first segment of the first portion may be diverted even when the first portion is without a bad block. In this example, the processing of the message is negatively impacted as diverting the message is more time consuming in relation to just executing the message.

In some embodiments, the processing circuit 115 may process one or more messages. For example, the processing circuit 115 may receive a message pertaining to a read request and the processing circuit 115 may perform one or more actions to process the message. To continue this example, the one or more actions may include the processing circuit 115 identifying at least one of a given logical drive 140 and/or a given piece of information stored by the given logical drive 140. As another example, the one or more actions may include the processing circuit 115 interfacing with the logical drive 140 to retrieve (responsive to the message pertaining to the read request) a given piece of information.

In some embodiments, the message tracker 135 may detect diversions of given messages. For example, the message tracker 135 may detect actions performed by the processing circuit 115 indicating a diversion of a message. In some embodiments, the message tracker 135 may update the table 130 to include indications of diversions. For example, the message tracker 135 may update a given portion of the table 130 to change a number (represented as bits) from a first value to a second value. In some embodiments, the message tracker 135 may detect that diversions associated with the controller 110 pertain to memory devices including bad blocks. For example, the processing circuit 115 may perform a first set of actions responsive to detection of a bad block and the message tracker 135 may identify that the processing circuit 115 performed the first set of actions.

In some embodiments, the message tracker 135 may monitor a workload of the controller 110 and/or the processing circuit 115. For example, the table 130 and/or the pattern may indicate and/or record at least one of tasks, actions, operations, steps and/or activities performed by the controller 110. In some embodiments, the message tracker 135 may monitor subsequent messages, received by the controller 110, to detect a difference between messages. For example, the message tracker 135 may have updated the table 130 based on a first plurality of messages and the message tracker 135 may examine a second plurality of messages based on the table 130. To continue this example, the table 130 may provide and/or indicate a workload for the controller 110 and the message tracker 135 may utilize the workload to detect when the controller 110 is experiencing and/or receiving messages at a rate that is different from the pattern indicated in the table 130. Stated otherwise, the table 130 may indicate that the controller 110 receives a given amount of read requests over a given amount of time and the message tracker 135 may utilize the table 130 to detect when the controller 110 is receiving read request at a rate that is different from the table 130.

In some embodiments, the message tracker 135 may identify memory devices and/or components to divert messages. For example, the message tracker 135 may determine that the controller 110 is receiving messages a rate that is different from the pattern and the message tracker 135 may divert, to a second controller 110, a given number of messages to adjust and/or change how many messages are being processed by the controller 110. In some embodiments, the message tracker 135 may determine that the controller 110 is receiving a number of messages pertaining to a given logical drive 140 and the message tracker 135 may divert a given number of messages that pertain to the given logical drive 140.

In some embodiments, the message tracker 135 may update a table to reflect one or more diversions. For example, the message tracker 135 may update the table 130 to reflect a number of messages that were diverted from the controller 110. In some embodiments, the message tracker 135 may update the table 130 to include an indication of where the messages were diverted (e.g., identify the second controller 110, identify a given logical drive 140, etc.). In some embodiments, the message tracker 135 may determine that a number of diversions exceeds a threshold. For example, the message tracker 135 may update the table 130 to indicate given diversions and the message tracker 135 may detect when the given diversions exceed a threshold (e.g., a number of diversions). As another example, the table 130 may include an overflow and/or flag that is set and/or triggered responsive to a portion of the table 130 exceeding an amount of information allocated for the portion (e.g., the portion includes 4 bits and once all 4 bits are set to 1, the portion may no longer be incremented). To continue this example, the setting of the overflow may trigger the message tracker 135 detecting that the number of diversions exceed a threshold.

In some embodiments, the message tracker 135 may execute one or more actions to address one or more diversions. For example, the message tracker 135 may identify and/or detect one or more second controllers 110, based on workloads for the one or more second controllers 110, to divert messages to. As another example, the message tracker 135 may detect that the controller 110 is interacting with a given logical drive 140 at a rate that is different from one or more second logical drives 140. To continue this example, the message tracker 135 may move information, stored in the given logical drive 140, to the one or more second logical drives 140.

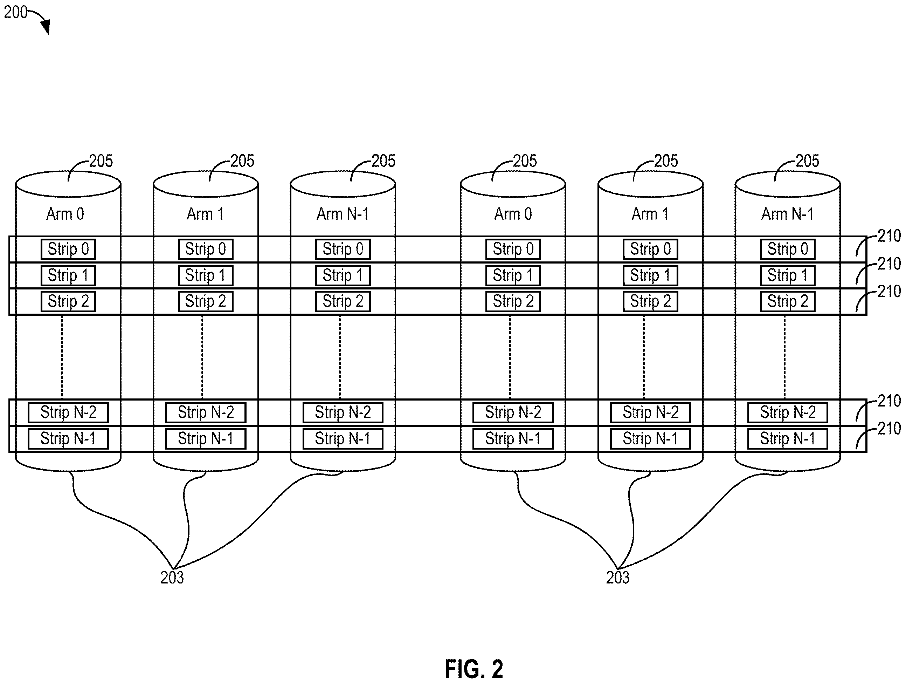

FIG. 2 depicts a system 200, according to some embodiments. The system 200 includes one or more arrays 203. The arrays 203 may refer to and/or include the logical drives 140. For example, a first array 203 may include a first logical drive 140 and a second array 203 may include a second logical drive 140. The arrays 203 include portions 205 and/or arms 205. The arms 205 may refer to and/or include the portions of the memory devices described herein. For example, a first arm 205 may include a first portion of the memory devices. The arms 205 include one or more segments (shown as strip 0, 1, 2, N-2, and N-1 in FIG. 2). For example, a first segment of a first arm 205 may refer to and/or include strip 0. A corresponding strip for a corresponding arm may be included in a corresponding row of memory. For example, FIG. 2 illustrates that Strip 0, for each corresponding arm 205, is included in a first row 210.

In some embodiments, one or more arrays may be associated with one or more applications. For example, a first array 203 may be associated with an email application and a second array 203 may associated with a document application. To continue this example, the first array 203 and the second array 203 may be in communication with and/or interface with the controller 110. As another example, the first array 203 may interface with a first controller 110 and the second array 203 may interface with a second controller 110.

In some embodiments, the message tracker 135 may associate, connect, and/or otherwise link messages with arrays. For example, the message tracker 135 may update portions of the table 130 that pertain to given arrays 203. To continue this example, a first portion of the table 130 may pertain to messages (received by the controller 110) that pertain to a first array 203 and a second portion of the table 130 may pertain to messages that pertain to a second array 203. In some embodiments, the first array 203 and the second array 203 may include a given number of segments (e.g., strips) and the message tracker 135 may determine, based on the given number of segments that at least one of the first array 203 and/or the second array 203 is underutilized (e.g., has free segments).

In some embodiments, the message tracker 135 may identify, based on the pattern, at least one portion of the memory devices to allocate for a given action. For example, a first array 203 may include 100 segments and the pattern may indicate that only 50 segments of the first array 203 are utilized. To continue this example, the message tracker 135 may identify at least one segment of the first array 203 to allocate for a given action. Stated otherwise, given that the first array 203 includes free segments, the message tracker 135 may allocate a given number of the free segments to write requests.

In some embodiments, the message tracker 135 may monitor the pattern based on one or more subsequent requests. For example, the processing circuit 115 may receive one or more messages subsequent to the table 130 having been updated to identify the pattern. To continue this example, the message tracker 135 may monitor the pattern based on characteristics of the one or more messages. In some embodiments, the message tracker 135 may monitor the pattern by examining, analyzing, and/or inspect the one or more messages. As another example, the message tracker 135 may create a second version of the table 130 and the second version of the table 130 may updated based on the one or more messages. Stated otherwise the message tracker 135 may establish a workload (based on the table 130) for the controller 110 and the message tracker 135 may create subsequent versions of the table 130 to compare against the workload.

In some embodiments, the message tracker 135 may detect a number of instances pertaining to one or more portions of memory devices. For example, the message tracker 135 may detect a number of write operations (performed by the controller 110) for a given array 203. To continue this example, the given array 203 may include segments and/or portions that have been allocated by the message tracker 135. In some embodiments, the message tracker 135 may identify a change to the pattern. For example, the workload may indicate that controller 110 performs a given number of write operations to free segments of the given array 203 and the message tracker 135 may identify, based on detected number of write operations to the free segments, a change to the pattern.

In some embodiments, the message tracker 135 may deallocate, responsive to identification of the change to the pattern, the at least one portion. For example, the message tracker 135 may have allocated one or more segments of a given array 203 and the message tracker 135 may deallocate the one or more segments of the given array 203 responsive to identifying the change in the pattern. In some embodiments, the processing circuit 115 may process at least one message using the one or more segments of the given array 203. For example, the one or more segments of the given array 203 may have been previously unavailable (responsive to the message tracker 135 having allocated the one or more segments). To continue this example, the processing circuit 115 may use the one or more segments to process messages given that the one or more segments have be deallocated.

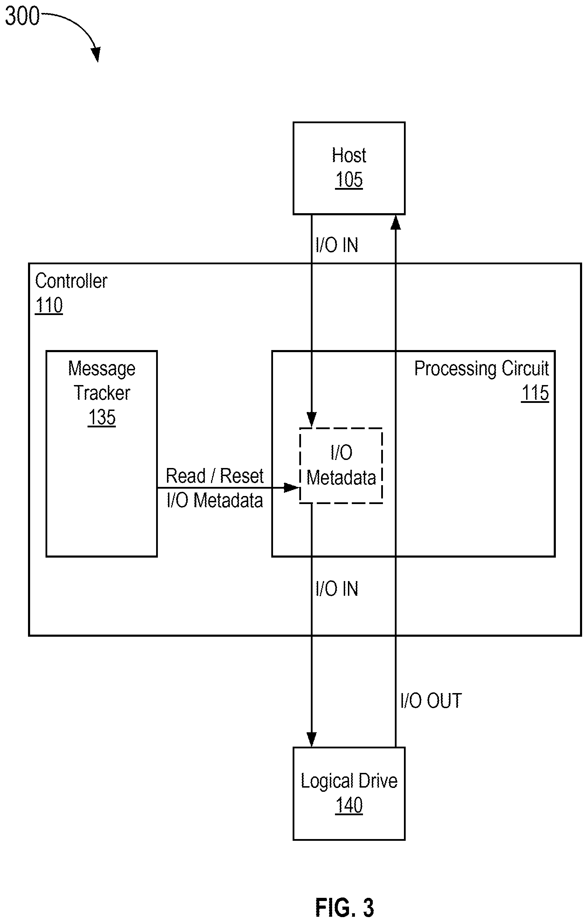

FIG. 3 depicts a block diagram of a system 300, according to some embodiments. The system 300 may include and/or be implemented with the system 100. The system 300 includes the host 105, the controller 110, and the logical drive 140. FIG. 3 depicts an example of the processing circuit 115 receiving one or more I/O messages (shown as I/O IN) and an example of the processing circuit 115 providing one or more responses (shown as I/O OUT). In some embodiments, the I/O IN messages may refer to the various messages described herein. For example, a first I/O IN message may be a read request. In some embodiments, the I/O OUT messages may refer to and/or include information pertaining to one or more actions. For example, a first I/O OUT message may include a given piece of information responsive to a first I/O IN message pertaining to a read request.

As shown in FIG. 3, the message tracker 135 is shown to be monitoring the processing circuit 115 by accessing, viewing, and/or otherwise examining I/O Metadata. In some embodiments, the I/O Metadata may include information pertaining to the I/O IN messages and/or the I/O OUT messages. In some embodiments, the message tracker 135 may utilize the I/O Metadata to update the table 130. For example, the message tracker 135 may determine, based on the I/O Metadata, a number of read requests that have been processed by the controller 110. As another example, the message tracker 135 may determine, based on the I/O Metadata, a given amount of information that has been processed by the controller 110. To continue this example, the message tracker 135 may increment and/or count pieces of information and their corresponding size to determine the given amount of information.

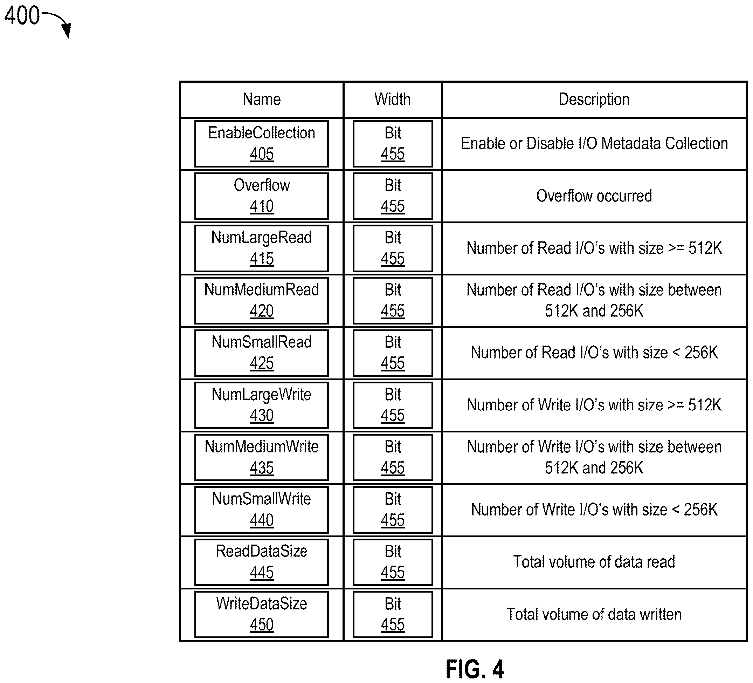

FIG. 4 depicts a table 400, according to some embodiments. In some embodiments, the table 400 may refer to and/or include the table 130. In some embodiments, the table 400 may be located and/or stored in memory 125. In some embodiments, the message tracker 135 may update, adjust, modify, and/or otherwise change portions and/or aspects of the table 400. For example, the message tracker 135 may update a first portion of the table 400.

The table 400 may include one or more potions, one or more rows, and/or one or more segments. For example, the table 400 may include a first portion and the first portion may include a first row. To continue this example, the first portion may be associated with given messages. In some embodiments, the given messages may include the I/O messages.

The table 400 includes portion 405 and/or EnableCollection 405, portion 410 and/or Overflow 410, portion 415 and/or NumLargeRead 415, portion 420 and/or NumMediumRead 420, portion 425 and/or NumSmallRead 425, portion 430 and/or NumLargeWrite 430, portion 435 and/or NumMediumWrite 435, portion 440 and/or NumSmallWrite 440, portion 445 and/or ReadDataSize 445, and portion 450 and/or WriteDataSize 450. The portions (e.g., portions 405-450) include a given width (shown as bits 455). FIG. 4 includes an example of the portions including corresponding descriptions. For example, portion 405 is shown to have a description indicating that portion 405 (based on values of bits 455) may enable and/or disable Metadata collection. To continue this example, the bits 455 for the portion 405 may be changed and/or adjusted to enable and/or disable collection. In some embodiments, the bits for the portion 405 may activate and/or deactivate the message tracker 135.

While FIG. 4 includes descriptions for the portions (e.g., portions 405-450) of the table 400, the descriptions provide non-limiting examples of what various portions of the table 400 may represent. Additionally, while the descriptions include given numerical values, the given numerical values provide non-limiting examples of what the amount of information described herein may include. For example, portion 415 is shown to correspond to (based on the description shown in FIG. 4) to a number of Read I/O's (e.g., read requests) that pertained to information (e.g., datasets) that are larger than 512 Kilobytes. To continue this example, the portion 415 (e.g., bits 455 corresponding to the portion 415) may be updated by the message tracker 135 based on detection of the processing circuit 115 receiving subsequent read requests. Stated otherwise, the message tracker 135 may update the bits 455 corresponding to the portion 415 as the processing circuit 115 receives read requests that pertain to information larger than 512K. For example, the message tracker 135 may increment (e.g., adjust, change, modify, etc.) the bits 455 from a first value (e.g., a first collection of 0's or l's) to a second value (e.g., a second collection of 0's or 1's).

As a non-limiting example, the portion 440 may be updated by the message tracker 135 responsive to the message tracker 135 detecting that the processing circuit 115 received one or more messages pertaining to Write I/O'S. In this non-limiting example, the bits 455 corresponding to the portion 440 may include 8 bits and the 8 bits may have a given value (e.g., 0's or l's). To continue this non-limiting example, the message tracker 135 may update the 8 bits to change the bits from the given value to a second given value. In this non-limiting example, the given value of the bits may be 00000010 (e.g., decimal 2 represented in binary) and the second given value of the bits may be 00000011 (e.g., decimal 3 represented in binary). To continue this non-limiting example, the bits being updated from the given value to second given value may indicate that the message tracker 135 detected that the processing circuit 115 received a read request message and the message tracker 135 then updated the bits to indicate receipt of the read request message (e.g., the message tracker 135 changed the bits to represent decimal 3).

As described herein, the processing circuit 115 may receive one or more messages and the messages may pertain to one or more datasets. For example, a first message may refer to a first dataset and a second message may refer to a second dataset. In some embodiments, the messages received by the processing circuit 115 may be associated with given actions. For example, a first message may be associated with a read request (e.g., a given action). In some embodiments, the message tracker 135 may update given portions of the table 400 responsive to the processing circuit 115 receiving messages. In some embodiments, the message tracker 135 may update one or more portions of the table 400. For example, a first portion of the table 400 may correspond to read requests (e.g., a number of read requests received by the processing circuit 115) and a second portion of the table 400 may correspond to read requests pertaining to a given amount of information (e.g., a number of read requests pertaining to the given amount of information). To continue this example, the message tracker 135 may detect that the processing circuit 115 received a first message pertaining to a read request that corresponds an amount of information having a given size. Additionally, the message tracker 135 may update the first portion of the table 400 (responsive to detecting the receipt of the read request) and the message tracker 135 may update the second portion of the table 400 (responsive to the read request corresponding to the amount of information).

In some embodiments, the message tracker 135 may determine, for messages received by the processing circuit 115, given actions and/or characteristics associated with the messages and the message tracker 135 may update given portions of the table 400 to reflect receipt of the messages. For example, the processing circuit 115 may receive a read request (e.g., a first message) and a write request (e.g., a second message). To continue this example, the message tracker 135 may update a first portion of the table 400 to include an indication of receipt of the first message (e.g., the first portion corresponds to read request) and the message tracker 135 may update a second portion of the table 400 to include an indication of receipt of the second message (e.g., the second portion corresponds to write requests).

In some embodiments, the portions of the table 400 may reflect one or more messages and/or message characteristics. For example, the table 400 may include a first portion, a second portion, and a third portion. To continue this example, the first portion may correspond to read requests (e.g., a value of bits associated with the first portion indicates a number of read requests received by the processing circuit 115). Additionally, the second portion may correspond to write requests (e.g., a value of bits associated with the second portion indicates a number of write requests). Furthermore, the third portion may correspond to a combination of read requests and write requests (e.g., a value of bits associated with the third portion indicates a number of read requests and a number of write requests).

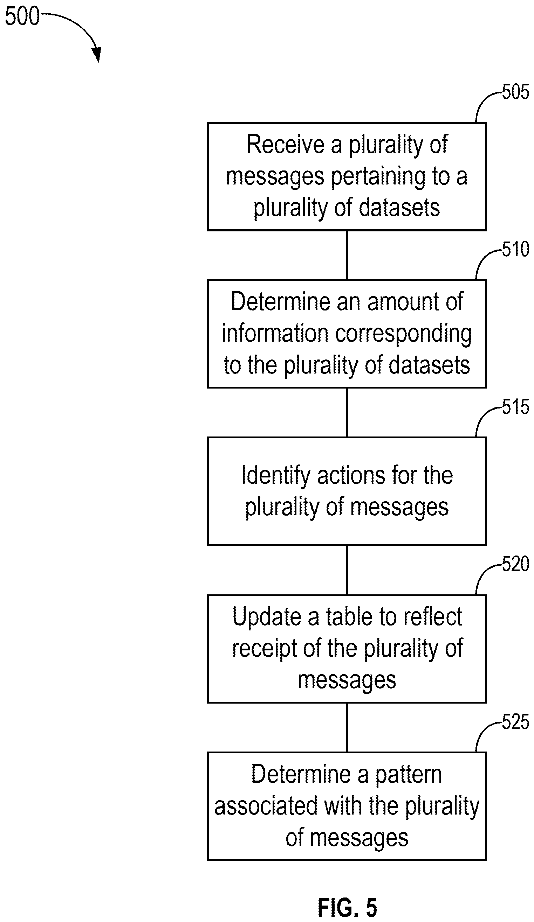

FIG. 5 depicts a flow diagram of a process 500 for handling workload, according to some embodiments. In some embodiments, the message tracker 135 may perform at least one step of the process 500. In some embodiments, the processing circuit 115 may perform at least one step of the process 500. In some embodiments, the processing circuit 115 may use the processor 120 to perform at least one step of the process 500. In some embodiments, handling workload may refer to and/or include the message tracker 135 determining a workload for the processing circuit 115. In some embodiments, handling workload may include the message tracker 135 being aware of the workload (e.g., workload awareness) for the processing circuit 115. In some embodiments, the message tracker 135 may handle the workload for the processing circuit 115. For example, the message tracker 135 may monitor interactions between the host 105 and the processing circuit 115. As another example, the message tracker 135 may monitor a number of messages received by the processing circuit 115.

At step 505, a plurality of messages pertaining to a plurality of datasets may be received, in some embodiments. For example, the processing circuit 115 may receive a plurality of I/O messages from the host 105. In some embodiments, the processing circuit 115 may receive the I/O messages continuously (e.g., a first message followed by a second message). In some embodiments, the processing circuit 115 may receive the I/O messages at a given frequency (e.g., a second message is received after a given amount of time between receiving a first message). In some embodiments, the plurality of datasets may be stored by one or more memory devices. For example, the plurality of datasets may be stored by a physical medium of the logical drives 140.

In some embodiments, the message tracker 135 may detect messages received by the processing circuit 115. For example, the message tracker 135 may detect the messages that were received by the processing circuit 115 in step 505. In some embodiments, the message tracker 135 may detect receipt of the messages by interfacing with the processing circuit 115. For example, the message tracker 135 may interface with the processing circuit 115 to extract and/or obtain the I/O Metadata described herein. In some embodiments, the I/O Metadata may indicate receipt of the messages.

At step 510, an amount of information corresponding to the plurality of datasets may be determined, in some embodiments. For example, the message tracker 135 may determine an amount of information for datasets that pertain to the messages received in step 505. To continue this example, a first message may pertain to a first dataset and a second message may pertain to a second dataset. In some embodiments, the message tracker 135 may determine the amount of information based on a size of one or more datasets. For example, a first dataset may include a first number of bits (e.g., a first amount of information) and a second dataset may include a second number of bits (e.g., a second amount of information). The first number of bits and the second number of bits may be same. For example, the first dataset may include 1024 bits and the second dataset may also include 1024 bits. As another example, the first number of bits may include 2048 bits and the second number of bits may include 512 bits.

In some embodiments, the message tracker 135 may determine the amount of information based on an identifier and/or a location of one or more datasets. For example, a first dataset may include a first identifier and the message tracker 135 may determine, based on the identifier of the first dataset, an amount of information corresponding to the first dataset. As another example, a first dataset may be located in a first array 203 and a second dataset may be located in a second array 203. To continue this example, the message tracker 135 may determine and/or detect that datasets located in the first array 203 include a first amount of information and that datasets located in the second array 203 include a second amount of information.

At step 515, actions for the plurality of messages may be identified, in some embodiments. For example, the message tracker 135 may determine actions for the messages received in step 505. In some embodiments, the actions determined in step 515 may include the various actions described herein. For example, a first message may be a read request and the processing circuit 115 may process the read request by performing one or more actions. To continue this example, the message tracker 135 may identify that the first message is a read request responsive to the processing circuit 115 performing the one or more actions.

In some embodiments, the message tracker 135 may identify actions based on characteristics of the messages. For example, a first message may correspond to a write request and the write request may include given information and/or given identifiers (e.g., characteristics). To continue this example, the message tracker 135 may detect characteristics of the first message based on the first message including the given information and/or the given identifier. In some embodiments, the message tracker 135 may identify actions for the messages by determining that given messages include a given arrangements (e.g., configuration). For example, a first message may correspond to a write request and write requests may include a packet having a first portion and a second portion (e.g., an arrangement). To continue this example, the message tracker 135 may identify that the first message corresponds to the write request responsive to determining that the first message includes the first portion and the second portion.

At step 520, a table may be updated to reflect receipt of the messages, in some embodiments. For example, the message tracker 135 may update the table 400 to reflect receipt of the messages received in step 505. In some embodiments, the table 400 may include one or more portions pertaining to one or more messages. For example, a first portion may correspond to read requests and a second portion may correspond to write requests. In some embodiments, the message tracker 135 may update the portions by adjusting, changing, and/or modifying bits associated with the portions. For example, the message tracker 135 may determine that a first message pertains to a read request and that the first message corresponds to an amount of information that is less than 256K. To continue this example, the message tracker 135 may update bits 455 corresponding to the portion 425. As another example, the message tracker 135 may update bits 455 corresponding to the portion 450.

In some embodiments, the message tracker 135 may update the table 400 as messages are received (e.g., a first message is received and the message tracker 135 then updates the table 400). In some embodiments, the message tracker 135 may examine the I/O Metadata at one or more given intervals and the I/O Metadata may indicate, for respective intervals, a number of messages received and information pertaining to the messages.

In some embodiments, the message tracker 135 may update the table 400 by incrementing bits. For example, the message tracker 135 may update bits 455 corresponding to the portion 415 by 1 (e.g., bits 455 includes bits 0000, prior to detection of a read message, and the message tracker 135 may update bits 455 to 0001 to reflect receipt of the read message).

At step 525, a pattern associated with the plurality of messages may be determined, in some embodiments. For example, the message tracker 135 may determine a pattern associated with the messages received in step 505. In some embodiments, the message tracker 135 may determine the pattern by examining, reviewing, and/or analyzing the table 400. For example, the message tracker 135 may analyze the portion 415 of the table 400 to determine a number of messages pertaining to read requests corresponding to datasets (e.g., an amount of information corresponding to datasets) greater than 512K.

In some embodiments, the pattern may include at least one of a number of messages pertaining to updates of the datasets, a number of messages pertaining to accesses of the datasets, a number of messages corresponding to a given amount of information, and/or a number of messages included in the messages. For example, the pattern may include a number of messages that were received by the processing circuit 115 in step 505. As another example, the pattern may indicate a number of read requests that were received by the processing circuit 115 in step 505.

While some examples describing steps included in the process 500 pertain to messages received in step 505, one or more steps of the process 500 may be repeated and/or executed more than once. For example, the processing circuit 115 may continuously and/or semi-continuously receive messages and the message tracker 135 may monitor and/or detect various aspects of the messages received by the processing circuit. As another example, the processing circuit may receive a first message and the message tracker 135 may then perform at least one of steps 510-525 with respect to the first message. To continue this example, the message tracker 135 may determine that the first message is a write request and the message tracker 135 may then update a given portion of the table 400 to reflect receipt of the write. Additionally, the message tracker 135 may repeat at least one of steps 510-525 responsive to the processing circuit 115 receiving one or more messages.

The hardware systems described herein may be implemented in many different ways and in many different combinations of hardware and software and circuit designs. For example, all or parts of the implementations may be circuitry that includes an instruction processor, such as a Central Processing Unit (CPU), microcontroller, or a microprocessor; an Application Specific Integrated Circuit (ASIC), Programmable Logic Device (PLO), or Field Programmable Gate Array (FPGA); or circuitry that includes discrete logic or other circuit components, including analog circuit components, digital circuit components or both; or any combination thereof. The circuitry may include discrete interconnected hardware components and/or may be combined on a single integrated circuit die, distributed among multiple integrated circuit dies, or implemented in a Multiple Chip Module (MCM) of multiple integrated circuit dies in a common package, as examples. In some embodiments, the circuitry can be provided on one or more integrated circuit dies in an integrated circuit package. The integrated circuit package can be a combination of two or more packages in some embodiments.

The circuitry may further include or access instructions (e.g., software or firmware) for execution by the circuitry. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HOD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed as circuitry among multiple system components, such as among multiple processors and memories, optionally including multiple distributed processing systems. Parameters, databases, and other data structures may be separately stored and managed, may be incorporated into a single memory or database, may be logically and physically organized in many different ways, and may be implemented in many different ways, including as data structures such as linked lists, hash tables, arrays, records, objects, or implicit storage mechanisms. Programs may be parts (e.g., subroutines) of a single program, separate programs, distributed across several memories and processors, or implemented in many different ways, such as in a library, such as a shared library (e.g., a Dynamic Link Library (DLL)). The DLL, for example, may store instructions that perform any of the processing described above or illustrated in the drawings, when executed by the circuitry.

The term "coupled" and variations thereof includes the joining of two members directly or indirectly to one another. The term "electrically coupled" and variations thereof includes the joining of two members directly or indirectly to one another through conductive materials (e.g., metal or copper traces). Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities that can operate within a system or environment. It should be understood that the systems described above can provide multiple ones of any or each of those components and these components can be provided on either a standalone machine or, in some embodiments, on multiple machines in a distributed system. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system (100), comprising:
a plurality of memory devices (140) storing a plurality of datasets, each memory device (140) of the plurality of memory devices (140) comprising a physical medium for storing the plurality of datasets; and
a device (110) in communication with the plurality of memory devices (140) and a host (105), the device (110) comprising:
one or more circuits (115) comprising a processor (120) and memory (125), and the one or more circuits (115) configured to:
receive, from the host (105), a plurality of messages pertaining to the plurality of datasets;
determine, using the processor (120), responsive to receipt of the plurality of messages, an amount of information corresponding to each dataset of the plurality of datasets;
identify, using the processor (120), based on characteristics of the plurality of messages, actions for each message of the plurality of messages, the actions including at least one of updates to the plurality of datasets or accesses of the plurality of datasets;
update, using the processor (120), based on the amount of information and the actions, a table located in the memory (125) to reflect receipt of the plurality of messages; and
determine, using the processor (120), responsive to updating the table, a pattern associated with the plurality of messages, the pattern indicating at least one of:
a number of messages pertaining to updates of the plurality of datasets;
a number of messages pertaining to accesses of the plurality of datasets;
a number of messages corresponding to a given amount of information; or
a number of messages included in the plurality of messages.

2. The system (100) of claim 1, wherein the pattern indicates a first number of messages pertaining to updates of the plurality of datasets and the pattern indicates a second number of messages pertaining to accesses of the plurality of datasets.

3. The system (100) of claim 2, wherein the one or more circuits (115) are further configured to:
receive, from the host (105), a second plurality of messages pertaining to the plurality of datasets;
identify, using the processor (120), based on characteristics of the second plurality of messages, actions for respective messages of the second plurality of messages,
detect, using the processor (120), based on the pattern, a difference between the plurality of messages and the second plurality of messages; and
identify, using the processor (120), responsive to detection of the difference, a second plurality of memory devices (140) to divert at least one message of the second plurality of messages.

4. The system (100) of claim 2 or 3, wherein the one or more circuits (115) are further configured to:
update, using the processor (120), responsive to a diversion of at least one message of a second plurality of messages, a second table located in the memory (125) to reflect the diversion;
determine, using the processor (120), based on the second table, that a number of diversions exceeds a threshold; and
execute, using the processor (120), responsive to determination that the number of diversions exceeds the threshold, one or more actions to address the number of diversions.

5. The system (100) of any of claims 1 to 4, wherein the one or more circuits (115) are further configured to:
identify, using the processor (120), based on the pattern, at least one portion of the plurality of memory devices (140) to allocate for a given action of the actions;
monitor, using the processor (120), responsive to receipt of a second plurality of messages, the pattern based on characteristics of the second plurality of messages;
detect, using the processor (120), a number of instances pertaining to utilization of the at least one portion of the plurality of memory devices (140); and
identify, using the processor (120), responsive to detection of the number of instances, a change to the pattern.

6. The system (100) of claim 5, wherein the one or more circuits (115) are further configured to:
deallocate, using the processor (120), responsive to identification of the change to the pattern, the at least one portion of the plurality of memory devices (140); and
process, using the processor (120), using the at least one portion of the plurality of memory devices (140), at least one message of the second plurality of messages.

7. The system (100) of any of claims 1 to 6, comprising at least one of the following features:
wherein:
a first message of the plurality of messages pertains to a first dataset of the plurality of datasets having a first amount of information;
the first message of the plurality of messages is associated with an update to the first dataset; and
the one or more circuit (115)s are configured to reflect receipt of the first message of the plurality of messages by:
updating, using the processor (120), a first number of messages from a first value to a second value, the first number of messages pertaining to updates of the plurality of datasets, and wherein the second value of the first number of messages accounts for receipt of the first message; and
updating, using the processor (120), a second number of messages from a third value to a fourth value, the second number of messages corresponding to the first amount of information, and wherein the fourth value of the second number of messages accounts for receipt of the first message;
wherein the one or more circuits (115) are further configured to:
execute, using the processor (120), one or more actions to process the plurality of messages;
detect, using the processor (120), responsive to execution of the one or more actions, at least one message of the plurality of messages associated with a memory device (140) of the plurality of memory devices (140) that includes a bad block; and
update, using the processor (120), responsive to detection of the at least one message, a second table located in the memory corresponding to memory devices (140) of the plurality of memory devices (140) with bad blocks from a first size to a second size to account for the memory device (140) including the bad block;
wherein the table includes a plurality of portions and wherein the one or more circuits (115) are configured to update, using the processor (120), based on the amount of information and the actions, the table located in the memory (125) to reflect receipt of the plurality of messages by:
updating, using the processor (120), responsive to detection of a first message of the plurality of messages indicating a first update to a first dataset of the plurality of datasets, a first portion of the plurality portions to include an indication of receipt of the first message;
updating, using the processor (120), responsive to detection of a second message of the plurality of messages indicating a first access of a second dataset of the plurality of datasets, a second portion of the plurality of portions to include an indication of receipt of the second message;
updating, using the processor (120), based on an amount of information associated with at least one of the first message or the second message, a third portion of the plurality of portions to reflect an indication of at least one of the first message or the second message corresponding to the amount of information; and
updating, using the processor (120), a fourth portion of the plurality of portions to indicate an indication of the first message and an indication of the second message.

8. A device (110) in communication with a plurality of memory devices (140) storing a plurality of datasets and a host (105), each memory device (140) of the plurality of memory devices (140) comprising a physical medium for storing the plurality of datasets, and the device (110) comprising:
one or more circuits (115) comprising a processor (120) and memory (125), and the one or more circuits (115) configured to:
receive, from the host (105), a plurality of messages pertaining to the plurality of datasets;
determine, using the processor (120), responsive to receipt of the plurality of messages, an amount of information corresponding to each dataset of the plurality of datasets;
identify, using the processor (120), based on characteristics of the plurality of messages, actions for each message of the plurality of messages, the actions including at least one of updates to the plurality of datasets or accesses of the plurality of datasets;
update, using the processor (120), based on the amount of information and the actions, a table located in the memory (125) to reflect receipt of the plurality of messages; and
determine, using the processor (120), responsive to updating the table, a pattern associated with the plurality of messages, the pattern indicating at least one of:
a number of messages pertaining to updates of the plurality of datasets;
a number of messages pertaining to accesses of the plurality of datasets;
a number of messages corresponding to a given amount of information; or
a number of messages included in the plurality of messages.

9. The device (110) of claim 8, wherein the pattern indicates a first number of messages pertaining to updates of the plurality of datasets and the pattern indicates a second number of messages pertaining to accesses of the plurality of datasets.

10. The device (110) of claim 9, comprising at least one of the following features:
wherein the one or more circuits (115) are further configured to:
receive, from the host (105), a second plurality of messages pertaining to the plurality of datasets;
identify, using the processor (120), based on characteristics of the second plurality of messages, actions for respective messages of the second plurality of messages,
detect, using the processor (120), based on the pattern, a difference between the plurality of messages and the second plurality of messages; and
identify, using the processor (120), responsive to detection of the difference, a second plurality of memory devices (140) to divert at least one message of the second plurality of messages;
wherein the one or more circuits (115) are further configured to:
update, using the processor (120), responsive to a diversion of at least one message of a second plurality of messages, a second table located in the memory (125) to reflect the diversion;
determine, using the processor (120), based on the second table, that a number of diversions exceeds a threshold; and
execute, using the processor (120), responsive to determination that the number of diversions exceeds the threshold, one or more actions to address the number of diversions.

11. The device (110) of any of claims 8 to 10, wherein the one or more circuits (115) are further configured to:
identify, using the processor (120), based on the pattern, at least one portion of the plurality of memory devices (140) to allocate for a given action of the actions;
monitor, using the processor (120), responsive to receipt of a second plurality of messages, the pattern based on characteristics of the second plurality of messages;
detect, using the processor (120), a number of instances pertaining to utilization of the at least one portion of the plurality of memory devices (140); and
identify, using the processor (120), responsive to detection of the number of instances, a change to the pattern.

12. The device (110) of claim 11, wherein the one or more circuits (115) are further configured to:
deallocate, using the processor (120), responsive to identification of the change to the pattern, the at least one portion of the plurality of memory devices (140); and
process, using the processor (120), using the at least one portion of the plurality of memory devices (140), at least one message of the second plurality of messages.

13. The device (110) of any of claims 8 to 12, comprising at least one of the following features:
wherein:
a first message of the plurality of messages pertains to a first dataset of the plurality of datasets having a first amount of information;
the first message of the plurality of messages is associated with an update to the first dataset; and
the one or more circuits (115) are configured to reflect receipt of the first message of the plurality of messages by:
updating, using the processor (120), a first number of messages from a first value to a second value, the first number of messages pertaining to updates of the plurality of datasets, and wherein the second value of the first number of messages accounts for receipt of the first message; and
updating, using the processor (120), a second number of messages from a third value to a fourth value, the second number of messages corresponding to the first amount of information, and wherein the fourth value of the second number of messages accounts for receipt of the first message;
wherein the one or more circuits (115) are further configured to:
execute, using the processor (120), one or more actions to process the plurality of messages;
detect, using the processor (120), responsive to execution of the one or more actions, at least one message of the plurality of messages associated with a memory device (140) of the plurality of memory devices (140) that includes a bad block; and
update, using the processor (120), responsive to detection of the at least one message, a second table located in the memory corresponding to memory devices (140) of the plurality of memory devices (140) with bad blocks from a first size to a second size to account for the memory device (140) including the bad block.

14. A method, comprising:
receiving, by one or more circuits (115) comprising a processor (120) and memory (125), from a host (105), a plurality of messages pertaining to a plurality of datasets stored by a plurality of memory devices (140), each memory device (140) of the plurality of memory devices (140) comprising a physical medium for storing the plurality of datasets;
determining, by the one or more circuits (115) using the processor (120), responsive to receipt of the plurality of messages, an amount of information corresponding to each dataset of the plurality of datasets;
identifying, by the one or more circuits (115) using the processor (120), based on characteristics of the plurality of messages, actions for each message of the plurality of messages, the actions including at least one of updates to the plurality of datasets or accesses of the plurality of datasets;
updating, by the one or more circuits (115) using the processor (120), based on the amount of information and the actions, a table located in the memory (125) to reflect receipt of the plurality of messages; and
determining, by the one or more circuits (115) using the processor (120), responsive to updating the table, a pattern associated with the plurality of messages, the pattern indicating at least one of:
a number of messages pertaining to updates of the plurality of datasets;
a number of messages pertaining to accesses of the plurality of datasets;
a number of messages corresponding to a given amount of information; or
a number of messages included in the plurality of messages.

15. The method of claim 14, comprising at least one of the following features:
further comprising:
identifying, by the one or more circuits (115) using the processor (120), based on the pattern, at least one portion of the plurality of memory devices (140) to allocate for a given action of the actions;
monitoring, by the one or more circuits (115) using the processor (120), responsive to receipt of a second plurality of messages, the pattern based on characteristics of the second plurality of messages;
detecting, by the one or more circuits (115) using the processor (120), a number of instances pertaining to utilization of the at least one portion of the plurality of memory devices (140); and
identifying, by the one or more circuits (115) using the processor (120), responsive to detection of the number of instances, a change to the pattern;
further comprising:
deallocating, by the one or more circuits (115) using the processor (120), responsive to identification of the change to the pattern, the at least one portion of the plurality of memory devices (140); and
processing, by the one or more circuits (115) using the processor (120), using the at least one portion of the plurality of memory devices (140), at least one message of the second plurality of messages.
